# FASCICULE DE BREVET EUROPEEN

(11) **EP 1 337 409 B1**
(45) Date de publication et mention de la délivrance du brevet: **08.04.2009**
(21) Numéro de dépôt: 01998457.4
(22) Date de dépôt: 28.11.2001
(51) Int. Cl.: B60H 1/00, G05G 7/10, F16C 1/18

(54) **DISPOSITIF DE TRANSFERT DE CHARGE**
LASTÜBERTRAGUNGSVORRICHTUNG
LOAD TRANSFER DEVICE

(30) Priorité: 01.12.2000 DE 10059872
(43) Date de publication de la demande: 27.08.2003
(73) Titulaire: Valeo Klimasysteme GmbH, 96476 Rodach (DE)
(72) Inventeur: GESELL, Bodo, 64850 Schaafheim (DE)
(74) Mandataire: Lemaire, Marc
(86) Numéro de dépôt international: PCT/IB2001/002251
(87) Numéro de publication internationale: WO 2002/043977

(56) Documents cités:
- DE-A- 19 547 695
- US-A- 4 041 797
- US-A- 5 129 281
- US-A- 5 235 866

## Description

La présente invention concerne généralement un dispositif de transmission de force et en particulier un dispositif de transmission de force pour une commande à clapet dans une installation de chauffage, ventilation et/ou climatisation d'un véhicule à moteur, par exemple sous la forme d'une transmission compacte à bande.

Jusqu'à présent, les commandes à clapet étaient réalisées par le biais d'éléments d'accouplement essentiellement rigides, par exemple sous la forme d'articulations tournantes et/ou d'éléments de traction-poussée, ou au moyen d'agencements d'engrenages complexes, comme par exemple des agencements d'engrenages à roue dentée.

Des dispositifs de transmission de force pourvus d'éléments de transmission de force flexibles sont également connus sous la forme de commandes par câbles ou de câbles Bowden, dans lesquels on utilise en variante des bandes sans fin qui viennent en prise par adhérence par exemple avec des poulies à courroies. Lesdits câbles Bowden peuvent transmettre la force d'un dispositif de charge à un dispositif à entraîner, le dispositif de charge ou le dispositif à charger étant habituellement précontraint dans l'une des positions au moyen d'un ressort ou d'autres moyens appropriés.

Afin d'obtenir un positionnement bien défini entre le dispositif de charge et le dispositif à charger, on a entre autres aussi essayer de réaliser un engagement positif. On connaît par exemple par le modèle d'utilisation allemand 1 508 231 un dispositif de transmission de force qui comprend deux roues dentées qui viennent en prise dans des évidements dans une bande sans fin métallique servant d'élément de transmission.
En outre, le document DE-C1-40 02 619 décrit un dispositif de transmission de force dans lequel une bande sans fin entoure plusieurs éléments rotatifs, un dispositif de fixation étant prévu au niveau d'au moins l'un des dispositifs rotatifs, afin de fixer la bande sans fin par rapport au corps rotatif en question. Dans la forme de réalisation illustrée, ce dispositif de fixation comprend une vis de serrage au moyen de laquelle on peut empêcher un glissement de la bande par rapport à la poulie à courroie.

Finalement, le document DE-C2-38 38 018 décrit un dispositif de transmission de force selon le préambule de la revendication 1, dont la fonction correspond à celle d'une bande sans fin, mais assure toutefois un positionnement relatif exact entre l'élément d'entraînement et l'élément entraîné, du fait que chaque portion d'extrémité d'une bande peut être amenée en engagement positif en des positions définies avec le dispositif d'entraînement et/ou le dispositif entraîné au choix.

Toutes les solutions connues présentent l'inconvénient de nécessiter un grand nombre de composants avec une grande utilisation de matériau, le coût du montage et la complexité des solutions se trouvant habituellement accrus, lorsqu'un espacement relativement faible existe entre le dispositif d'entraînement et le dispositif entraîné.

L'objet de la présente invention consiste donc à réduire l'utilisation de matériaux et le nombre d'éléments de construction, ainsi que la complexité de l'ensemble du dispositif.

Conformément à l'invention, cet objet est réalisé par un dispositif de transmission de force, en particulier pour une commande à clapet dans une installation de chauffage, ventilation et/ou climatisation d'un véhicule à moteur, comprenant au moins deux dispositifs à accoupler et un dispositif d'accouplement, qui comprend au moins une partie flexible, en ce que la partie flexible longitudinale est connectée par liaison de matière à au moins l'un des dispositifs à accoupler. Autrement dit, déjà lors de la fabrication des composants individuels du dispositif, une unité de montage est formée à partir du dispositif d'accouplement et d'au moins l'un des dispositifs à accoupler, de telle sorte que le coût du montage sur place et le nombre de pièces mises en jeu soient réduits, tandis que la connexion par liaison de matière obtenue par exemple par un procédé d'assemblage ou par surmoulage, permet une transmission de force élevée pour un positionnement relatif défini.

De manière avantageuse, le dispositif d'accouplement comprend au moins deux parties flexibles longitudinales, dont au moins l'une est connectée par liaison de matière à au moins l'un des dispositifs à accoupler. En fournissant au moins deux parties flexibles longitudinales, la fonctionnalité d'une bande sans fin par exemple peut être réalisée, par exemple une transmission de couple dans les deux sens, tandis qu'un positionnement relatif entre le dispositif d'accouplement et le ou les dispositifs à accoupler peut être obtenu, en plus de l'au moins une connexion par liaison de matière, au moyen d'autres connexions par liaison de matière, connexions par adhérence et/ou connexions par engagement positif.

Dans une forme de réalisation préférée, au moins une partie du dispositif d'accouplement est connectée par liaison de matière dans chaque cas à au moins une paire des dispositifs à accoupler, de sorte qu'un agencement de montage essentiellement d'une pièce soit formé à partir des dispositifs à accoupler et du dispositif d'accouplement. Cette configuration spéciale permet ainsi de réduire davantage le nombre de pièces nécessaires et les opérations de montage associées, tandis qu'un ajustement ultérieur des clapets d'air mis en jeu après le montage n'est plus nécessaire en raison des positionnements obtenus lors du processus de fabrication.

De manière avantageuse, un évidement de matière est prévu dans l'élément à accoupler à proximité d'au moins une zone de connexion par liaison de matière. Un tel évidement de matière permet de contrôler la connexion par liaison de matière avant le montage, dans la mesure où il peut recevoir également de la matière en excès se produisant éventuellement lors du processus de fabrication, de surmoulage ou d'assemblage.

De manière particulièrement préférée, deux évidements de matière sont prévus à proximité d'une zone de connexion par liaison de matière, de sorte que l'on puisse réaliser une zone de connexion de dimensions exactement définissables. Dans le cas par exemple d'un procédé d'assemblage ou d'un surmoulage d'une bande de plastique sur une roue en plastique ou un axe en plastique, on peut garantir, en prévoyant deux évidements adjacents, qu'une connexion par liaison de matière n'a lieu qu'à l'endroit souhaité. Il convient de mentionner que les évidements de part et d'autre peuvent aussi être réalisés en prévoyant, avant l'application du procédé d'assemblage ou du surmoulage, un évidement dans l'élément à accoupler, dans lequel on met ensuite de la matière en vue de la connexion par liaison de matière.

Dans une autre forme de réalisation préférée, au moins un évidement de matière est réalisé dans au moins l'un des dispositifs à accoupler, pour la connexion par engagement positif avec au moins une partie du dispositif d'accouplement. Dans ce cas, il peut s'agir aussi bien d'un évidement de matière adjacent à la connexion par liaison de matière, que d'un évidement de matière réalisé séparément. Grâce à cette forme de réalisation, il est possible de prévoir dans un dispositif de transmission de force, à la fois des connexions par liaison de matière et des connexions par engagement positif. Par exemple, un élément d'accouplement en forme de bande pourrait être surmoulé sur un élément à accoupler, après quoi, lors du montage, l'accouplement serait réalisé par engagement positif par rapport à l'autre pièce à accoupler. En variante, il serait aussi possible de relier une partie du dispositif d'accouplement au moyen d'une liaison de matière aux deux dispositifs à accoupler, tandis qu'une autre partie du dispositif d'accouplement est connectée par engagement positif aux dispositifs à accoupler.

De manière avantageuse, la connexion par liaison de matière obtenue par exemple par un procédé d'assemblage ou par surmoulage est prévue dans une zone d'extrémité de la ou des parties du dispositif d'accouplement. En prévoyant la connexion par liaison de matière dans une zone d'extrémité, on peut éviter de manière simple que celles-ci dépassent, tandis qu'un enveloppement multiple de l'un des dispositifs à accoupler peut être réalisé de manière simple, sans entraîner un fort pliage ou une forte courbure de l'élément d'accouplement.

En variante et/ou en complément de ceci, la connexion par liaison de matière peut également être prévue dans une zone centrale de la ou des parties du dispositif d'accouplement. A titre d'exemple, il serait ainsi possible pour l'utilisation de deux dispositifs à accoupler, de placer l'élément d'accouplement essentiellement au milieu sur l'un des dispositifs à accoupler, par exemple par soudage, collage ou par assemblage l'un à l'autre par technique d'injection dans le procédé de fabrication, après quoi les deux extrémités de même longueur du dispositif d'accouplement doivent être amenées en engagement avec l'autre dispositif à accoupler, et ce par adhérence, par engagement positif ou par tout autre moyen approprié.

Au lieu de prévoir la zone de connexion par liaison de matière dans la zone d'extrémité ou dans une zone centrale du dispositif d'accouplement, le dispositif d'accouplement peut aussi être une bande sans fin, auquel cas une connexion à un ou plusieurs des dispositifs à accoupler peut être prévue à des endroits appropriés, par liaison de matière, obtenue par exemple par surmoulage et/ou procédé d'assemblage.

Finalement, on préfère que la connexion par liaison de matière résulte d'un procédé technique d'injection, d'un soudage, d'un brasage et/ou d'un collage. Ainsi, il est possible par exemple de surmouler l'élément d'accouplement sur l'un des éléments à accoupler, de prévoir une fusion thermique dans le cas de pièces en plastique, et/ou d'envisager un collage entre l'élément d'accouplement et l'élément à accoupler.

Pour résumer, on peut constater que l'on peut réduire le nombre de pièces nécessaires et le coût du montage nécessaire en prévoyant une connexion par liaison de matière obtenue par un procédé de fabrication, de surmoulage et/ou d'assemblage, tout en permettant un contrôle initial plus facile de l'engagement entre l'élément d'accouplement et l'élément à accoupler.

D'autres avantages et caractéristiques de la présente invention résultent également de la description suivante fournie à titre d'exemple uniquement de quelques-unes des formes de réalisation actuellement préférées de la présente invention, en référence aux dessins annexés, dans lesquels :
La figure 1 illustre une première forme de réalisation préférée d'un dispositif de transmission de force selon l'invention pendant le montage et après le montage.
La figure 2 illustre une deuxième forme de réalisation préférée.
La figure 3 illustre une troisième forme de réalisation préférée similaire à une représentation de la figure 1, c'est-à-dire avant le montage et après le montage.
La figure 4 illustre, dans une représentation analogue à celle des figures 1 et 3, une quatrième forme de réalisation préférée d'un dispositif de transmission de force selon l'invention.
La figure 5 illustre un perfectionnement de la forme de réalisation illustrée dans la figure 2.
La figure 6 illustre un autre perfectionnement de la forme de réalisation illustrée dans la figure 2.

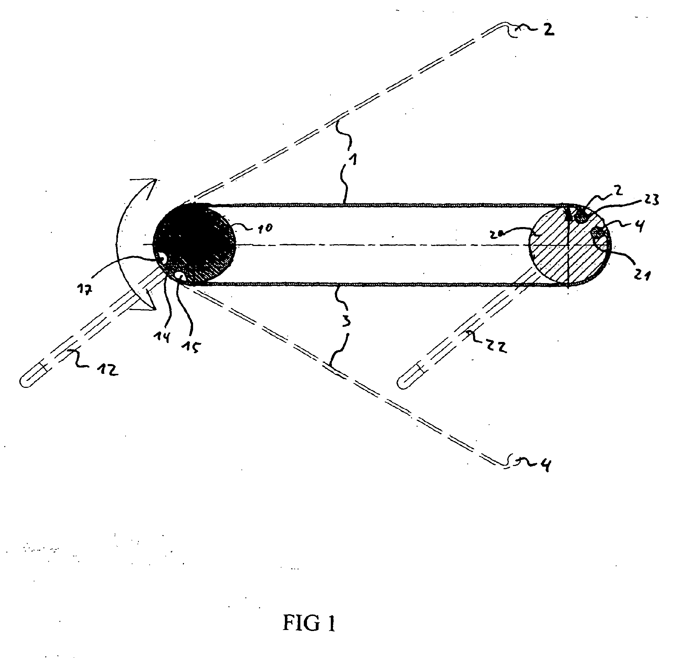

Dans la forme de réalisation illustrée dans la figure 1, un premier élément à accoupler 10 avec un clapet 12 doit être connecté à un deuxième élément à accoupler 20 avec un deuxième clapet 22, de telle sorte qu'une transmission de force soit possible. Les éléments à accoupler 10, 20 peuvent être des axes, des adaptateurs d'axes ou une partie du clapet lui-même et/ou similaire. Dans la forme de réalisation illustrée, seulement deux pièces doivent être montées lors du montage. Dans ce cas, il s'agit du premier élément à accoupler 10, sur lequel une bande 1, 2, 3, 4 est surmoulée au niveau du repère de référence 14. Comme indiqué en lignes pointillées, les éléments à accoupler 10, 20 peuvent aussi être placés dans leurs positions souhaitées, après quoi les extrémités 2 et 4 des bandes 1 et 3 sont accouplées au deuxième élément à accoupler 20, en plaçant les extrémités 2, 4 dans des évidements de forme correspondante 21, 23 dans le deuxième élément à accoupler 20.

Après le montage, la connexion par liaison de matière existant déjà avant le montage se trouve ainsi dans une zone centrale de l'élément d'accouplement 1, 2, 3, 4, et il existe une liaison respective au deuxième élément à accoupler 20 par engagement positif au niveau des zones d'extrémités 2, 4. Il convient de mentionner encore, dans cette forme de réalisation, les évidements de matière 15, 17 sur le premier élément à accoupler 10, lesquels permettent de contrôler la zone de connexion par liaison de matière 14 avant le montage. En outre, ces évidements de matière 15, 17 permettent de créer une zone de connexion de dimensions définies, ce qui peut présenter l'avantage supplémentaire d'une certaine élasticité de la zone de connexion 14 ou aussi celui d'une zone destinée à la rupture. Ainsi, si le mouvement de l'un des clapets 12, 22 était empêché, la connexion par liaison de matière se casserait en cas de sollicitation de force, sans que les clapets 12, 22 soient endommagés. A des fins de maintenance, il suffirait donc de démonter le dispositif de transmission de force pour réaliser à nouveau la connexion par liaison de matière.

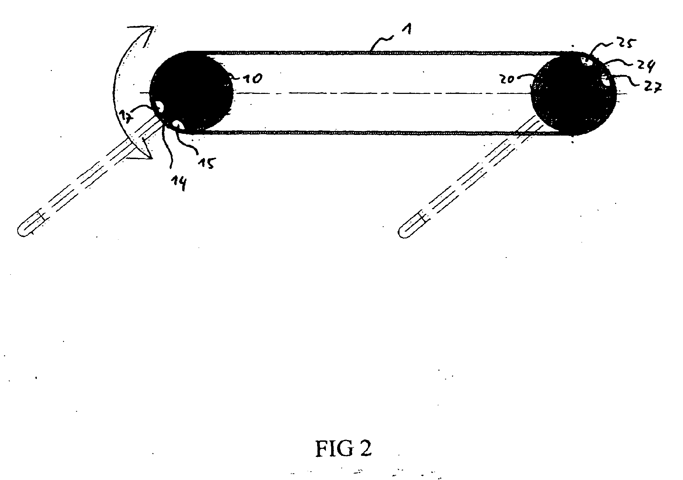

La figure 2 illustre la forme de réalisation préférée d'un dispositif de transmission de force selon l'invention sous forme de transmission compacte à bande. Dans ce cas, comme dans la forme de réalisation illustrée dans la figure 1, on veut réaliser un couple entre les éléments à accoupler 10, 20. A cet effet, on prévoit une bande sans fin enveloppant les éléments à accoupler 10, 20, laquelle est connectée au niveau des repères de référence 14, 24 par liaison de matière au moyen d'un procédé d'assemblage approprié à chacun des éléments à accoupler 10, 20. Dans cette forme de réalisation, des évidements de matière 15, 17 et 25, 27 sont à nouveau réalisés dans les éléments à accoupler 10, respectivement 20, à proximité des zones de connexion par liaison de matière 14, 24.

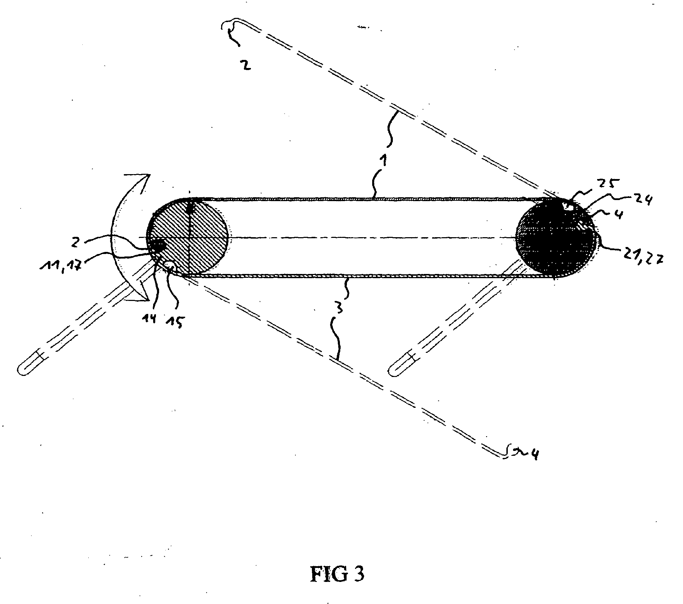

Dans les formes de réalisation illustrées dans la figure 3, chacun des éléments à accoupler 10, 20 est connecté par liaison de matière par un procédé d'assemblage approprié avant le montage, à une partie 1, 2, respectivement 3, 4 du dispositif d'accouplement. Après l'agencement de l'élément à accoupler 10, 20 dans les positions souhaitées respectives, il suffit alors d'amener les extrémités libres respectives des bandes en engagement par engagement positif avec les dispositifs respectifs à accoupler, pour réaliser l'accouplement final. Dans la forme de réalisation illustrée, les évidements de matière dans les éléments respectifs à accoupler sont réalisés pour l'engagement par engagement positif par les évidements de matière adjacents à la zone de connexion par liaison de matière 14, respectivement 24. Cette forme de réalisation permet ainsi, au cas où l'on prévoit une certaine élasticité pour la zone de connexion par liaison de matière, de défaire les accouplements par engagement positif respectifs en cas de sollicitation de force excessive, de sorte qu'il suffirait, dans le cas d'une contrainte excessive appliquée au dispositif de transmission de force selon l'invention, de reconstruire les points d'accouplement par engagement positif.

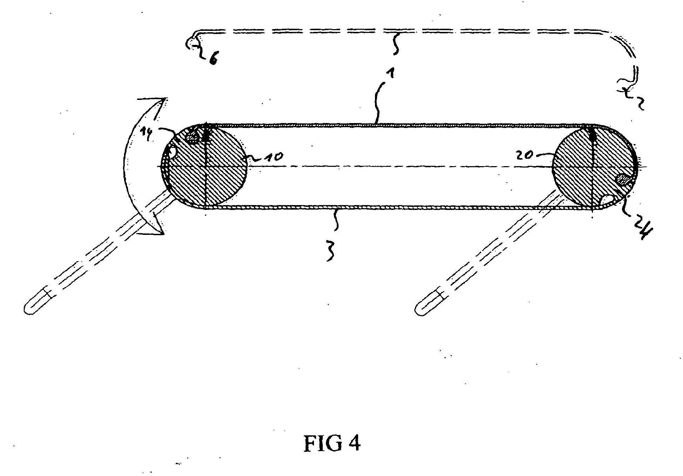

Dans la forme de réalisation illustrée dans la figure 4, l'élément d'accouplement comprend une bande 3 qui est connectée par liaison de matière à ses extrémités respectives aux éléments à accoupler 10, 20. Afin de pouvoir garantir la transmission du couple entre les deux éléments à accoupler 10, 20, il serait possible de précontraindre les éléments respectifs à accoupler, par exemple au moyen d'un ressort, toutefois, dans la forme de réalisation illustrée, il est prévu une autre bande 1 qui peut être connectée par engagement positif, au niveau de ses extrémités 2, 6, aux éléments à accoupler 10, 20. Cette forme de réalisation se caractérise par le fait que dans l'agencement des éléments à accoupler 10, 20 pendant le montage, leur espacement est défini exactement par la bande 3 surmoulée sur les deux éléments à accoupler 10, 20.

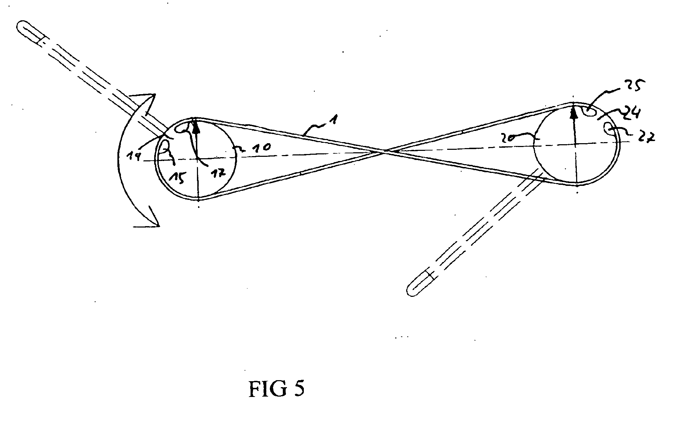

La forme de réalisation illustrée dans la figure 5 est une application spéciale de la forme de réalisation illustrée dans la figure 2, c'est-à-dire avec une bande sans fin, qui est connectée au moyen d'un procédé technique d'injection aux deux éléments à accoupler 10, 20. La forme de réalisation illustrée permet une transmission de couple inversée entre les éléments respectifs à accoupler 10 et 20.

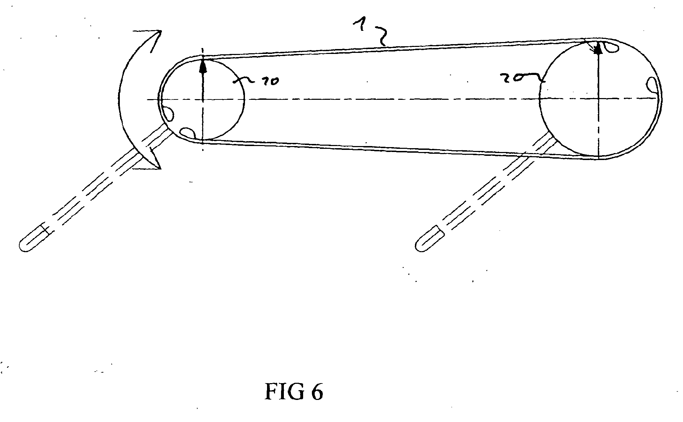

La figure 6 illustre finalement qu'une multiplication ou démultiplication est possible avec le dispositif de transmission de force selon l'invention.

Bien que la présente invention ait été décrite dans ce qui précède en se référant totalement à titre d'exemple aux formes de réalisation actuellement préférées, l'homme de l'art devrait reconnaître que de très nombreux compléments et perfectionnements sont possibles. En particulier, des caractéristiques particulières d'une forme de réalisation peuvent être combinées au choix avec d'autres caractéristiques d'autres formes de réalisation.

D'autre part, la présente invention n'est pas non plus limitée à des formes de réalisation avec uniquement deux éléments à accoupler, mais au contraire, elle peut s'appliquer à une pluralité quelconque d'éléments à accoupler, dans la mesure où au moins une connexion par liaison de matière existe entre le dispositif d'accouplement et l'un des dispositifs à accoupler. En ce qui concerne le procédé duquel est issue la connexion par liaison de matière, il convient de remarquer que celui-ci dépend essentiellement des matériaux du dispositif d'accouplement et des dispositifs à accoupler, et à cet égard, outre le surmoulage par technique d'injection mentionné plusieurs fois, d'autres procédés, en particulier un procédé d'assemblage, peuvent également être employés, comme par exemple un collage, un soudage thermique, un soudage mettant en jeu un matériau ou aussi des combinaisons quelconques de procédés connus en soi pour la réalisation d'une connexion par liaison de matière. En ce qui concerne le choix et les dimensions des zones de connexion par liaison de matière, on peut assurer à la fois une charge maximale ainsi qu'une certaine élasticité, afin de permettre une réparation et/ou une maintenance aussi économiques que possible.

## Revendications

1. Dispositif de transmission de force, en particulier pour une commande à clapet dans une installation de chauffage, ventilation et/ou climatisation d'un véhicule à moteur, comprenant au moins deux dispositifs à accoupler (10, 20) et un dispositif d'accouplement (1; 1, 2, 3, 4; 1, 2, 3, 6), qui comprend au moins une partie flexible longitudinale (1, 3), **caractérisé en ce que** la partie flexible longitudinale (1, 3) est connectée par liaison de matière à au moins l'un des dispositifs à accoupler (10, 20).

2. Dispositif de transmission de force selon la revendication 1, **caractérisé en ce que** le dispositif d'accouplement (1; 1, 2, 3, 4; 1, 2, 3, 6) comprend au moins deux parties flexibles longitudinales (1, 3), dont au moins l'une est connectée par liaison de matière à au moins l'un des dispositifs à accoupler (10, 20).

3. Dispositif de transmission de force selon l'une quelconque des revendications 1 ou 2, **caractérisé en ce qu'**au moins une partie (1, 3) du dispositif d'accouplement (1; 1, 2, 3, 4; 1, 2, 3, 6) est connectée par liaison de matière à au moins une paire des dispositifs à accoupler (10, 20).

4. Dispositif de transmission de force selon l'une quelconque des revendications précédentes, **caractérisé en ce qu'**un évidement de matière (15, 17, 25, 27) est prévu dans l'élément à accoupler (10, 20) à proximité d'au moins une zone de connexion par liaison de matière (14, 24).

5. Dispositif de transmission de force selon l'une quelconque des revendications précédentes, **caractérisé en ce que** deux évidements de matière (15, 17, 25, 27) sont prévus à proximité d'au moins une zone de connexion par liaison de matière (14, 24).

6. Dispositif de transmission de force selon l'une quelconque des revendications précédentes, **caractérisé en ce qu'**au moins un évidement de matière (11, 21, 23) est réalisé dans au moins l'un des dispositifs à accoupler (10, 20), pour la connexion par engagement positif à au moins une partie (1, 3) du dispositif d'accouplement (1; 1, 2, 3, 4; 1, 2, 3, 6).

7. Dispositif de transmission de force selon l'une quelconque des revendications précédentes, **caractérisé en ce que** la connexion par liaison de matière (14, 24) est prévue dans une zone d'extrémité de la ou des parties (1, 3) du dispositif d'accouplement (1; 1, 2, 3, 4; 1, 2, 3, 6).

8. Dispositif de transmission de force selon l'une quelconque des revendications précédentes, **caractérisé en ce que** la connexion par liaison de matière est prévue dans une zone centrale de la ou des parties (1, 3) du dispositif d'accouplement (1; 1, 2, 3, 4; 1, 2, 3, 6).

9. Dispositif de transmission de force selon l'une quelconque des revendications 1 à 6, **caractérisé en ce que** le dispositif d'accouplement (1; 1, 2, 3, 4; 1, 2, 3, 6) est une bande sans fin.

10. Dispositif de transmission de force selon l'une quelconque des revendications précédentes, **caractérisé en ce que** la connexion par liaison de matière résulte d'un procédé technique d'injection, d'un soudage, d'un brasage et/ou d'un collage.

## Claims

1. Force transmission device, especially for controlling a valve in a heating, ventilation and/or air conditioning installation of a motorised vehicle, comprising at least two devices to be coupled (10, 20) and a coupling device (1; 1, 2, 3, 4; 1, 2, 3, 6) which comprises at least one longitudinal flexible part (1, 3), **characterised in that** the longitudinal flexible part (1, 3) is connected by a material to at least one of the devices to be coupled (10, 20).

2. Force transmission device according to claim 1, **characterised in that** the coupling device (1; 1, 2, 3, 4; 1, 2, 3, 6) comprises at least two longitudinal flexible part (1, 3), of which at least one is connected by a material to at least one of the devices to be coupled (10, 20).

3. Force transmission device according to any of claims 1 or 2, **characterised in that** at least part (1, 3) of the coupling device (1; 1, 2, 3, 4; 1, 2, 3, 6) is connected by a material to at least one pair of the devices to be coupled (10, 20).

4. Force transmission device according to any of the previous claims, **characterised in that** at least one material recess (15, 17, 25, 27) is provided in the element to be coupled (10, 20) close to at least one material connection zone (14, 24).

5. Force transmission device according to any of the previous claims, **characterised in that** two material recesses (15, 17, 25, 27) are provided close to at least one material connection zone (14, 24).

6. Force transmission device according to any of the previous claims, **characterised in that** at least one material recess (11, 21, 23) is made in at least one of the devices to be coupled (10, 20), for positive connection by engagement with at least one part (1, 3) of the coupling device (1; 1, 2, 3, 4; 1, 2, 3, 6).

7. Force transmission device according to any of the previous claims, **characterised in that** the connection by a material (14, 24) is provided in one end zone of the part(s) (1, 3) of the coupling device (1; 1, 2, 3, 4; 1, 2, 3, 6).

8. Force transmission device according to any of the previous claims, **characterised in that** the connection by a material is provided in a central zone of the parts (1, 3) of the coupling device (1; 1, 2, 3, 4; 1, 2, 3, 6).

9. Force transmission device according to any of claims 1 to 6, **characterised in that** the coupling device (1; 1, 2, 3, 4; 1, 2, 3, 6) is an endless belt.

10. Force transmission device according to any of the previous claims, **characterised in that** the connection by material results from a technical injection, welding, brazing and/or gluing process.

## Patentansprüche

1. Kraftübertragungsvorrichtung, insbesondere zur Steuerung einer Ventilklappe in einer Heiz-, Lüftungs- oder Klimaanlage für ein Kraftfahrzeug mit mindestens zwei miteinander zu verkoppelnden Teilen (10, 20) und einer Koppelvorrichtung (1; 1, 2, 3, 4; 1, 2, 3, 6), die mindestens ein flexibles, längsgerichtetes Teil (1, 3) besitzt, **dadurch gekennzeichnet, dass** das flexible, längsgerichtete Teil (1, 3) kraftschlüssig mit mindestens einer der miteinander zu verkoppelnden Vorrichtungen (10, 20) verbunden ist.

2. Kraftübertragungsvorrichtung nach Anspruch 1, **dadurch gekennzeichnet, dass** die Koppelvorrichtung (1; 1, 2, 3, 4; 1, 2, 3, 6) mindestens zwei flexible, längsgerichtete Teile (1, 3) besitzt, von denen mindestens eines kraftschlüssig mit mindestens einer der miteinander zu verkoppelnden Vorrichtungen (10, 20) verbunden ist.

3. Kraftübertragungsvorrichtung nach Anspruch 1 oder 2, **dadurch gekennzeichnet, dass** mindestens ein Teil (1, 3) der Koppelvorrichtung (1; 1, 2, 3, 4; 1, 2, 3, 6) kraftschlüssig mit mindestens einem Paar der miteinander zu verkoppelnden Vorrichtungen (10, 20) verbunden ist.

4. Kraftübertragungsvorrichtung nach einem der vorhergehenden Ansprüche, **dadurch gekennzeichnet, dass** eine Aussparung (15, 17, 25, 27) in dem zu verkoppelnden Teil (10, 20) in der Nähe von mindestens einer Zone für kraftschlüssige Verbindung (14, 24) vorgesehen ist.

5. Kraftübertragungsvorrichtung nach einem der vorhergehenden Ansprüche, **dadurch gekennzeichnet, dass** zwei Aussparungen (15, 17, 25, 27) in der Nähe von mindestens einer Zone für kraftschlüssige Verbindung (14, 24) vorgesehen sind.

6. Kraftübertragungsvorrichtung nach einem der vorhergehenden ansprüche, **dadurch gekennzeichnet, dass** mindestens eine Aussparung (11, 21, 23) in mindestens einem der zu verkoppelnden Vorrichtungen (10, 20) zur formschlüssigen Verbindung mit mindestens einem Teil (1, 3) der Koppelvorrichtung (1; 1, 2, 3, 4; 1, 2, 3, 6) vorgesehen ist.

7. Kraftübertragungsvorrichtung nach einem der vorhergehenden Ansprüche, **dadurch gekennzeichnet, dass** die kraftschlüssigen Verbindung (14, 24) in einer Endzone des oder der Teile (1, 3) der Koppelvorrichtung (1; 1, 2, 3, 4; 1, 2, 3, 6) vorgesehen ist.

8. Kraftübertragungsvorrichtung nach einem der vorhergehenden Ansprüche, **dadurch gekennzeichnet, dass** die kraftschlüssige Verbindung (14, 24) in der zentralen Zone des oder der Teile (1, 3) der Koppelvorrichtung (1; 1, 2, 3, 4; 1, 2, 3, 6) vorgesehen ist.

9. Kraftübertragungsvorrichtung nach einem der Ansprüche 1 bis 6, **dadurch gekennzeichnet, dass** die Koppelvorrichtung (1; 1, 2, 3, 4; 1, 2, 3, 6) ein Endlosband ist.

10. Kraftübertragungsvorrichtung nach einem der vorhergehenden Ansprüche, **dadurch gekennzeichnet, dass** sich die kraftschlüssige Verbindung aus einem technischen Einspritzverfahren, einer Schweißung, einer Lötung und /oder einer Klebung ergibt.
